# EUROPÄISCHE PATENTSCHRIFT

(11) **EP 3 154 798 B1**
(45) Veröffentlichungstag und Bekanntmachung des Hinweises auf die Patenterteilung: **16.05.2018**
(21) Anmeldenummer: 15731860.1
(22) Anmeldetag: 02.06.2015
(51) Int. Cl.: B60B 39/02, B60B 39/08, B61C 15/10, B65G 53/14

(54) **STREUEINRICHTUNG FÜR DAS AUSBRINGEN VON SCHÜTTGUT, INSBESONDERE VON BREMSSAND, AN SCHIENENGEBUNDENEN FAHRZEUGEN**
SCATTERING DEVICE FOR SPREADING BULK MATERIAL, IN PARTICULAR BRAKING SAND, AT RAILBORNE VEHICLES
DISPOSITIF D'ÉPANDAGE POUR DÉLIVRER UN MATÉRIAU EN VRAC, EN PARTICULIER DU SABLE DE FREINAGE, SUR DES VÉHICULES FERROVIAIRES

(30) Priorität: 10.06.2014 DE 202014004632 U
(43) Veröffentlichungstag der Anmeldung: 19.04.2017
(73) Patentinhaber: Klein Anlagenbau AG, 57572 Niederfischbach (DE)
(72) Erfinder: MARKS, Thomas, 25557 Hanerau-Hademarschen (DE); SCHULTE, Enno, 57072 Siegen (DE)
(74) Vertreter: advotec.
(86) Internationale Anmeldenummer: PCT/EP2015/062263
(87) Internationale Veröffentlichungsnummer: WO 2015/189070

(56) Entgegenhaltungen:
- EP-A1- 1 470 981
- EP-A1- 1 647 419
- DE-B- 1 279 057

## Beschreibung

Die Erfindung betrifft eine Streueinrichtung für das Ausbringen von Schüttgut, insbesondere von Bremssand, an schienengebundenen Fahrzeugen, mit einem Vorratsbehälter für das Schüttgut, einem Auslauf am Vorratsbehälter, einer sich an den Auslauf anschließenden Mischeinrichtung mit einem zum druckluftbeaufschlagten Aufwirbeln des Schüttgutes vorgesehenen Mischraum, einem Einlass für die Zuführung der Druckluft in der Mischeinrichtung sowie einem zu einer Austragseinrichtung für das Schüttgut-Luft-Gemisch führenden Auslass im Mischraum bzw. in der Mischeinrichtung, wobei am Auslass eine Saugdüse vorgesehen ist, an die sich die Austragseinrichtung anschließt, wobei der Düsenkanal der Saugdüse durch eine zylindrische Bohrung gebildet wird, und wobei zur Bildung einer Sandtreppe im Mischraum die Saugdüse mit ihrem von der Austragseinrichtung abgewandten Ende so weit in den Mischraum hineinragt, dass das von der Austragseinrichtung abgewandte Ende der Saugdüse oberhalb der Austrittsöffnung des Auslaufes in dem Mischraum angeordnet ist.

Die Streuvorrichtung gehört zu der Art Streuvorrichtungen, die mit Hilfe von Schwerkraft oder von in schienengebundenen Fahrzeugen verfügbarer Druckluft Sand aus einem Vorratsbehälter dosiert in einen Mischraum fördern, dort Sand und Druckluft miteinander vermischen und über eine Austragseinrichtung, wie beispielsweise Rohr- oder Schlauchleitungen den Sand vor die Räder des jeweiligen schienengebundenen Fahrzeugs auf die Schiene aufbringen. Dies ist immer dann erforderlich, um z.B. bei schlechter Witterung, beispielsweise bei Regen, die Traktions- und Bremseigenschaften aufrechtzuerhalten oder zu verbessern.

Generell sollte einerseits möglichst kein Sand, z.B. durch Vibrationen des schienengebundenen Fahrzeugs, unbeabsichtigt auf die Schienen gelangen können. Anderseits sollte bei Bedarf ein möglichst gleichmäßiger Sandfluss in einer definierter Mengengröße (üblicherweise bemessen in g/30s oder g/m Schienenlänge) sicher zwischen Rad und Schiene gelangen können.

Aus der DE 1 279 057 ist beispielsweise eine Sandtreppe, insbesondere für Schienenfahrzeuge bekannt, bei der der Sand aus einem Sandbehälter infolge Schwerkraft durch ein auf besondere Weise verengtes und in etwa waagerecht verlaufendes Kanalstück in einen Mischraum fließt. Der Sand wird zunächst durch aus einer ersten Düse einschießende Luft aufgewirbelt, anschließend über eine Scheidewand (Sandtreppe) in den Ausblaskanal gehoben und mittels Luft aus einer zweiten Düse durch das anschließende Sandfallrohr auf die jeweilige Schiene aufgebracht.

Die erfindungsgemäße Streuvorrichtung gehört insbesondere zu der Art von Streuvorrichtungen für schienengebundene Fahrzeuge, die üblicherweise mit Drucklufteinrichtungen mit 3 bis 10 bar Überdruck, insbesondere mit 6 bis 10 bar Überdruck ausgestattet sind.

Bei derartigen Streuvorrichtungen wird in der Regel mittels Druckluft betriebener Strahlpumpen Luft und Sand aus einem Vorratsbehälter angesaugt, in einer als Trichter oder konisch in Strömungsrichtung zu einem Diffusorhals zulaufender (konvergenter) Kegelhohlform ausgestalteten Mischkammer mit der Düsen-Druckluft vermischt und als Gemisch insbesondere beim Durchgang durch den Diffusorhals mehr oder weniger gleichförmig beschleunigt, sowie anschließend durch eine im Querschnitt aufgeweitete Rohr- oder Schlauchleitung ausgeblasen.

Aus der EP 1 470 981 A1, der EP 2 100 788 A2 und der GB 663,674 sind beispielsweise Sandaustragsvorrichtungen bekannt, die das vorerwähnte Strahlpumpenprinzip nutzen. Die Strahlpumpe besteht dabei aus Düse (Treibdüse), Injektionsraum (Mischraum) und einer als "Venturi-Rohr" benannten Anordnung aus (konvergent) kegelförmiger Fangdüse, kurzer zylindrischer Verengung (Diffusorhals) und (divergent) kegelförmigem Diffusor.

Ferner ist aus der EP 2 311 653 A1 eine Sandaustragsvorrichtung bekannt, die das Strahlpumpenprinzip auf gleiche Weise nutzt und bei der die Mischkammer-Diffusor-Anordnung als Konstruktion mit in Strömungsrichtung von "Venturi-Rohren" abgeleiteten veränderlichen Querschnittsöffnungen ausgestaltet ist.

Bei derartigen Saug-Sandaustragsvorrichtungen bzw. Streuvorrichtungen sollte einerseits ein genügend großes Druckpotential des Treibmediums (Druckluft) gegenüber dem atmosphärischen Umgebungsdruck vor dem Rad und der Schiene zur Erzeugung einer großen Impulswirkung der Strahlpumpe vorhanden sein, damit auch grober Streusand sowie große Sandmengen angesaugt und beschleunigt sowie aus dem Diffusor oder durch einen Sandungsschlauch ausgeschossen, ausgeblasen oder ausgestreut werden können. Andererseits ist aber nur ein begrenztes Druckluftkontingent verfügbar, da die dafür zur Verfügung gestellte Bordnetzdruckluft von schienengebundenen Fahrzeugen aus Kostengründen in der Regel sehr knapp bemessen ist.

Eine gattungsgemäße Streueinrichtung (Auswerfer für körniges Material) ist zudem noch in der EP 1 647 419 A1 beschrieben.

Der Erfindung liegt daher die Aufgabe zugrunde, eine Streuvorrichtung der angegebenen Gattung zu schaffen, die bei gleichgroßem Druckluftverbrauch eine größere Sandmenge bzw. mehr Streusand mit schwereren Sandkörnern ansaugen und ausblasen kann bzw. die bei gleichbleibenden Sandmengen weniger Druckluft benötigt.

Diese Aufgabe wird erfindungsgemäß mit einer Streuvorrichtung mit den Kennzeichnungsmerkmalen des Patentanspruchs 1 gelöst.

Zweckmäßige Weiterbildungen der Erfindung sind in den Unteransprüchen gekennzeichnet.

Bei der erfindungsgemäßen Streueinrichtung wird der Düsenkanal der Saugdüse durch eine zylindrische Bohrung gebildet. Dabei ist die Länge der zylindrischen Bohrung innerhalb der Saugdüse mindestens gleich der Größe des Durchmessers der zylindrischen Bohrung in der Saugdüse. Der Abstand der Saugdüse bzw. der Eintrittsöffnung der Saugdüse zu der Austrittsöffnung des Einlasses für die Zuführung der Druckluft in der Mischeinrichtung ist vorzugsweise kleiner als die 2-fache Größe oder höchstens gleich der Größe des Innendurchmessers der zylindrischen Bohrung. Durch diese Ausbildung werden die Strömungseigenschaften innerhalb und außerhalb der Saugdüse wesentlich verbessert.

Zur Bildung einer Sandtreppe im Mischraum kann die Saugdüse mit ihrem von der Austragseinrichtung abgewandten Ende so weit in den Mischraum hineinragen, dass das von der Austragseinrichtung abgewandte Ende der Saugdüse oberhalb der Austrittsöffnung des Auslaufes in dem Mischraum angeordnet ist.

Die Größe des Innendurchmessers der zylindrischen Bohrung kann dabei mindestens 5-fach größer als der Durchmesser der Austrittsöffnung des Einlasses und/oder kleiner als die 12-fache Größe des Durchmessers der Austrittsöffnung des Einlasses sein.

Vorzugsweise kann dabei die Austrittsöffnung des Einlasses für die Zuführung der Druckluft koaxial zu der Bohrung der Saugdüse angeordnet sein.

In dem Einlass für die Zuführung der Druckluft kann in der Mischeinrichtung eine Treibdüse eingesetzt sein, wobei die Austrittsöffnung des Düsenkanals der Treibdüse der Austrittsöffnung des Einlasses entspricht.

An dem zur Austragseinrichtung gerichteten Ende der Saugdüse kann ein weiterer Einlass für die Zuführung von Druckluft vorgesehen sein, der eine Verbesserung der Beschleunigung des Sandes bewirkt.

An dem zu der Austragseinrichtung gerichteten Ende der Saugdüse kann zwischen der Saugdüse und der Austragseinrichtung eine Innenumfangsnut gebildet sein, in die der weitere Einlass radial mündet, wobei die Saugdüse mit ihrem zu der Austragseinrichtung gerichteten Ende in die Austragseinrichtung hineinragt und zwischen einem Absatz an dem zu der Austragseinrichtung gerichteten Ende der Saugdüse und einer Durchflussöffnung der Austragseinrichtung bzw. des Sandungs- oder Austragsschlauchs der Austragseinrichtung ein mit der Innenumfangsnut in Verbindung stehender Ringspalt gebildet ist. Diese Ausbildung sorgt für eine im Wesentlichen gleichmäßige Druckluftzufuhr über den gesamten Umfang der Saugdüse.

In dem weiteren Einlass kann eine Drossel angeordnet sein, die für eine ggf. erforderliche reduzierte Druckluftzufuhr sorgt.

Der Düsenkanal der Saugdüse kann einen sich an das Ende der zylindrischen Bohrung des Düsenkanals der Saugdüse anschließenden, sich bis zum zur Austragseinrichtung gerichteten Ende der Saugdüse erstreckenden, konisch aufgeweiteten Abschnitt aufweisen. Durch diesen Abschnitt werden Verwirbelungen usw. im Übergangsbereich zur Austragseinrichtung vermieden.

Die Saugdüse kann durch ein Rohr gebildet sein, das im Wesentlichen L-förmig ausgebildet sein kann. Dabei kann die Länge der zylindrischen Bohrung innerhalb des vertikal gerichteten Rohrabschnitts des Rohres gebildet sein.

Ferner kann die Saugdüse integraler Bestandteil der Austragseinreichtung sein.

Nachfolgend werden anhand der Zeichnung bevorzugte Ausführungsformen der erfindungsgemäßen Streueinrichtung näher erläutert.

Es zeigen
- **Fig. 1**: eine Schnittdarstellung einer z.T. dargestellten Streueinrichtung mit einer Saugdüse gemäß dem Stand der Technik,
- **Fig. 2**: eine Schnittdarstellung der Streueinrichtung nach **Fig. 1** mit einer erfindungsgemäßen Saugdüse entsprechend einer ersten Ausführungsform,
- **Fig. 3**: eine Schnittdarstellung der Streueinrichtung nach **Fig. 1** mit einer erfindungsgemäßen Saugdüse entsprechend einer zweiten Ausführungsform,
- **Fig. 4**: eine Schnittdarstellung einer Streueinrichtung mit einer erfindungsgemäßen Saugdüse entsprechend einer dritten Ausführungsform und
- **Fig. 5**: ein Vergleichsdiagramm mit unterschiedlichen Ausführungsformen von Saugdüsen.

Die in den **Figuren** dargestellten Streueinrichtungen 1 sind für das Ausbringen von Schüttgut, insbesondere Bremssand vorgesehen, die an schienengebundenen Fahrzeugen zum Einsatz kommen und mit denen je nach Witterungsverhältnissen durch Schwerkraft oder Druckluftunterstützung der Sand vor die Räder der Fahrzeuge auf die Schienen ausgeblasen wird, wodurch eine Verbesserung der Traktions- und Bremseigenschaften bei den vorgenannten Fahrzeugen erreicht bzw. ein Durchdrehen der Räder verhindert wird.

Die Streueinrichtung 1 weist jeweils einen Vorratsbehälter (nicht dargestellt) für den Sand auf, an dessen unterem Ende ein Auslauf vorgesehen ist, der beispielsweise trichterförmig ausgebildet sein kann. An das Ende 2 des Auslaufs schließt sich eine Mischeinrichtung 3 mit einem zum Aufwirbeln des Sandes vorgesehenen Mischraum 4 an, in dem das Aufwirbeln des Sandes zur Auflockerung bzw. "Verflüssigung" desselben durch Einblasen von Druckluft in den Mischraum 4 erfolgt. Für die Zuführung der Druckluft ist in der Mischeinrichtung 3 ein Einlass 5 vorgesehen, in den eine Treibdüse 6 eingesetzt ist, deren Austrittsöffnung 7 am Düsenkanal 8 gleichzeitig die Austrittsöffnung 7 des Einlasses 5 ist. In der Mischeinrichtung 3 ist ein aus dem Mischraum 4 herausführender und einer Austragseinrichtung 9 für das Sand-Luft-Gemisch zuführender Auslass 10 vorgesehen, an dem eine Saugdüse 11 vorgesehen ist. Die Austrittsöffnung 7 des Einlasses 5 bzw. die Austrittsöffnung 7 der Treibdüse 6 für die Zuführung der Druckluft ist dabei koaxial zu dem Düsenkanal 12 der Saugdüse 11 angeordnet. An die Saugdüse 11 schließt sich die Austragseinrichtung 9 an, die im Wesentlichen aus einem den Sand vor die Räder des jeweiligen Fahrzeugs leitenden Sandungs- oder Austragsschlauch 13 besteht.

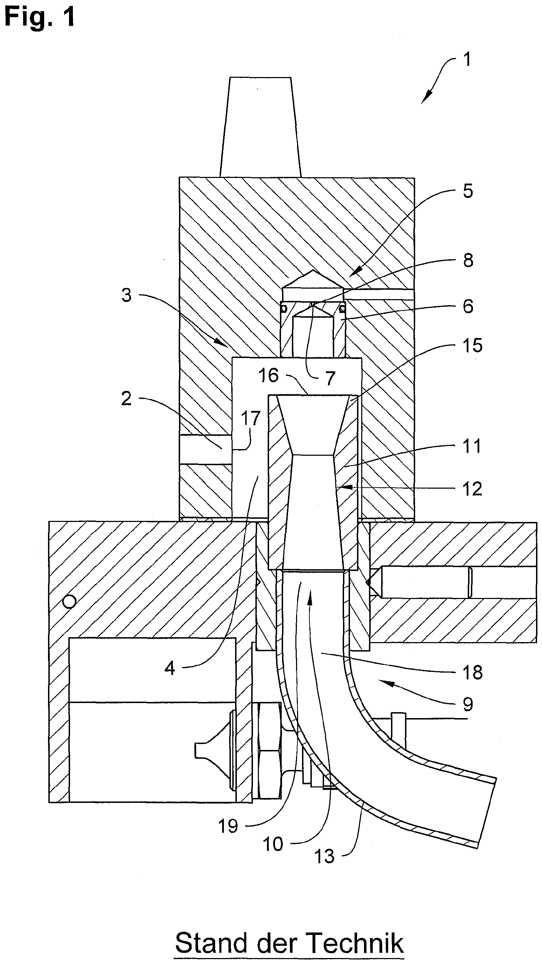

Wie in der **Fig. 1** dargestellt werden nach dem allgemeinen Stand der Technik in der Regel Saugdüsen 11 verwendet, deren Düsenkanal 12 im Wesentlichen dem Düsenkanal einer "Venturi"-Düse oder "Laval"-Düse entsprechen.

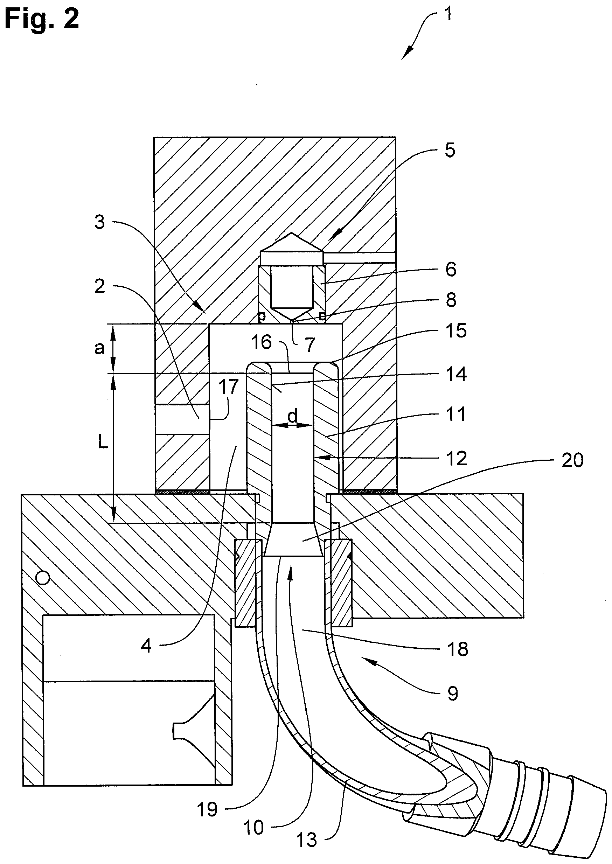

Bei den in **Fig. 2** bis **4** dargestellten erfindungsgemäßen Saugdüsen 11 sind die Düsenkanäle 12 der Saugdüsen 11 jeweils durch eine zylindrische Bohrung 14 gebildet. Dabei ist jeweils die Länge L der zylindrischen Bohrung 14 innerhalb der Saugdüse 11 mindestens gleich der Größe des Durchmessers d der zylindrischen Bohrung 14 in der Saugdüse 11 und der Abstand a der in den Mischraum 4 hineinragenden Saugdüse 11 bzw. des von der Austragseinrichtung 9 abgewandten Endes 15 der Saugdüse 11 bzw. der Eintrittsöffnung 16 der Saugdüse 11 zu der Austrittsöffnung 7 des Einlasses 5 für die Zuführung der Druckluft bzw. der Austrittsöffnung 7 der Treibdüse 6 in der Mischeinrichtung 3 kleiner als die 2-fache Größe des Innendurchmessers d der zylindrischen Bohrung 14, worauf später nochmals eingegangen wird.

Vorzugsweise ist die Größe des Innendurchmessers d der zylindrischen Bohrung 14 mindestens 5-fach größer als der Durchmesser der Austrittsöffnung 7 des Einlasses 5 bzw. der Austrittsöffnung 7 der Treibdüse 6 und/oder kleiner als die 12-fache Größe des Durchmessers der Austrittsöffnung 7 des Einlasses 6 bzw. der Austrittsöffnung 7 der Treibdüse 6, worauf später nochmals eingegangen wird.

Zur Bildung einer Sandtreppe im Mischraum 4 ragt die Saugdüse 11 mit ihrem von der Austragseinrichtung 9 abgewandten Ende 15 so weit in den Mischraum 4 hinein, dass das von der Austragseinrichtung 9 abgewandte Ende 15 der Saugdüse 11 oberhalb der Austrittsöffnung 17 des Auslaufs in den Mischraum 4 angeordnet ist und die Schwelle der Sandtreppe bildet. Der Sand nimmt dabei innerhalb der Sandtreppe einen im Wesentlichen S-förmigen Weg. Der aufgelockerte bzw. "verflüssigte" Sand wird über den in den Mischraum 4 einströmenden Druckluftstrom über den sich an den Mischraum 4 anschließenden Düsenkanal 12 der Saugdüse 11 in die Austragseinrichtung 9 gesaugt und mit dem Sandungs- oder Austragsschlauch 13 vor die Räder des jeweiligen Fahrzeugs geblasen.

Um Verwirbelungen im Übergangsbereich zur Austragseinrichtung 9 bzw. beim Austritt des Luft-Sand-Gemisches aus dem Düsenkanal 12 der Saugdüse 11 und beim Eintritt in die Austragseinrichtung 9 bzw. in die Durchflussöffnung 18 des Sandungs- oder Austragsschlauchs 13 der Austragseinrichtung 9 zu vermeiden, weist der Düsenkanal 12 der Saugdüse 11 einen sich an das Ende der zylindrischen Bohrung 14 des Düsenkanals 12 der Saugdüse 11 anschließenden, sich bis zum zur Austragseinrichtung 9 gerichteten Ende 19 der Saugdüse 11 erstreckenden, konisch aufgeweiteten Abschnitt 20 auf (siehe Ausführungsform der Saugdüse 11 nach **Fig. 2**).

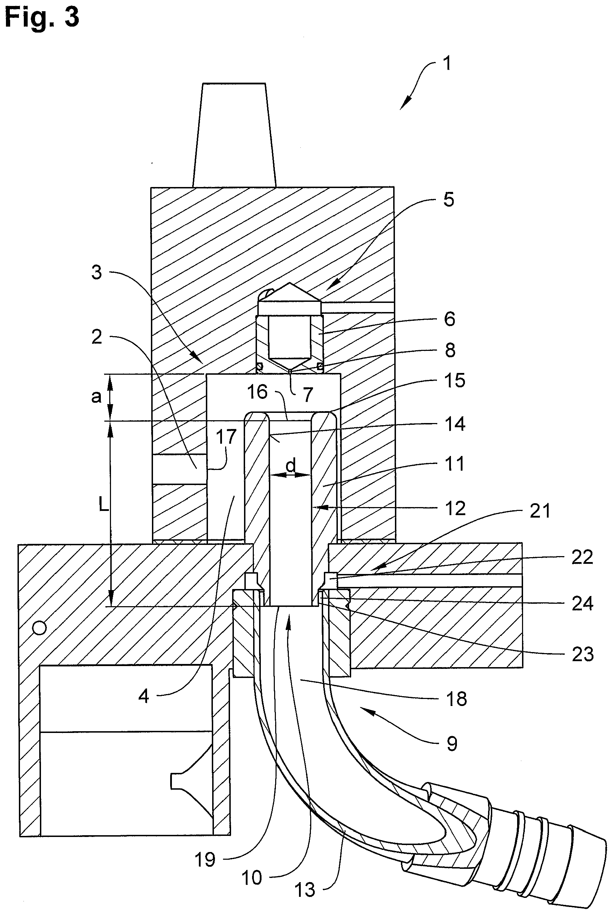

Zur Verbesserung der Beschleunigung des Luft-Sand-Gemisches ist an dem zur Austragseinrichtung 9 gerichteten Ende 19 der Saugdüse 11 ein weiterer Einlass 21 für die Zuführung von Druckluft vorgesehen. Dabei ist an dem zu der Austragseinrichtung 9 gerichteten Ende 19 der Saugdüse 11 zwischen der Saugdüse 11 und der Austragseinrichtung 9 eine Innenumfangsnut 22 gebildet, in die der weitere Einlass 21 radial mündet. Die Saugdüse 11 ragt mit ihrem zu der Austragseinrichtung 9 gerichteten Ende 19 in die Austragseinrichtung 9 bzw. in die Durchflussöffnung 18 des Sandungs- oder Austragsschlauchs 13 der Austragseinrichtung 9 hinein, wobei zwischen einem Absatz 23 an dem zu der Austragseinrichtung 9 gerichteten Ende 19 der Saugdüse 11 und der Durchflussöffnung 18 der Austragseinrichtung 9 bzw. des Sandungs- oder Austragsschlauchs 13 der Austragseinrichtung 9 ein mit der Innenumfangsnut 22 in Verbindung stehender Ringspalt 24 gebildet ist. Diese Ausbildung sorgt für eine optimale Zuführung der zusätzlichen Druckluft (siehe Ausführungsform der Saugdüse 11 nach **Fig. 3**).

Für den Fall, dass die Druckluftzufuhr des weiteren Einlasses 21 aufgrund von besonderen Erfordernissen gedrosselt werden muss, ist in dem weiteren Einlass 21 eine Drossel angeordnet (nicht dargestellt).

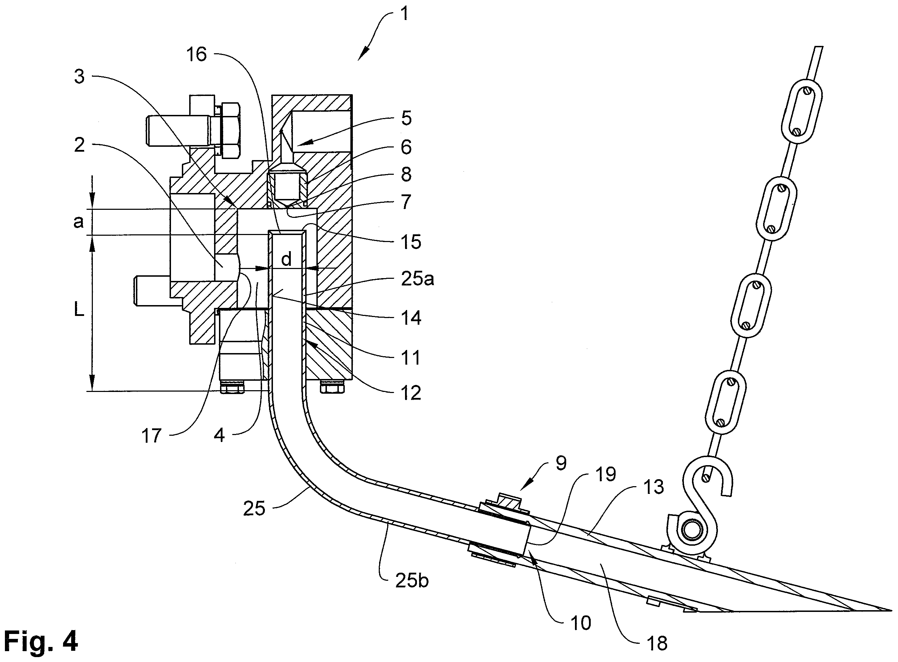

Die in **Fig. 1** bis **3** dargestellten Streueinrichtungen 1 sind zur Anbringung unterhalb des Vorratsbehälters vorgesehen, wobei die in **Fig. 4** dargestellte Streueinrichtung 1 seitlich am Vorratsbehälter angebracht wird.

Bei der in **Fig. 4** dargestellten Streueinrichtung 1 ist die Saugdüse 11 durch ein Rohr 25 gebildet, das vorzugsweise im Wesentlichen L-förmig ausgebildet ist. Dabei weist das L-förmige Rohr 25 einen vertikal gerichteten Rohrabschnitt 25a und einen horizontal oder schräg nach unten gerichteten Rohrabschnitt 25b auf, wobei sich an Letzteren 25b die Austragseinrichtung 9 direkt anschließt. Die Länge L der zylindrischen Bohrung 14 ist bei dieser Ausführungsform innerhalb des vertikal gerichteten Rohrabschnittes 25a gebildet.

Die Saugdüse 11 kann auch integraler Bestandteil der Austragseinrichtung 9 sein.

Bei Versuchen hat sich vergleichsweise gezeigt, dass die üblichen Ausgestaltungen von Strahlpumpen mit sogenannten "Venturi-Rohren" oder sogar mit "Lavaldüsen" (siehe **Fig. 1**) nachempfundenen Strömungsorganen für das Ansaugen, das "Mischen" und die Beschleunigung von Sand-Luft-Gemischen offensichtlich nicht optimal sind oder dass sich "fließende" oder "strömende" Sand-Luft-Mengen als beständige Zwei-Phasen-Systeme in ihren Strömungseigenschaften von eigentlich üblicherweise mit Strahlpumpen geförderten Saugmedien unterscheiden.

Vielmehr hat sich gezeigt, dass üblicherweise mit Saug-Sandstreusystemen geförderte Sandmengen bei gleichen Luftdruckpotentialen signifikant weniger Druckluftmenge (gemessen in Nl/min) benötigen, wenn wenigstens die Anordnung aus (konvergent) kegelförmiger Fangdüse und Diffusorhals durch die erfindungsgemäße Saugdüse 11 (Hohlzylinder) mit im Wesentlichen gleichbleibendem Innendurchmesser d ersetzt wird und der Abstand a der Treibdüsenaustrittsöffnung 7 vom ersten Rand der zur Treibdüse 6 koaxial angeordneten Saugdüse 11 sowie die Abmessungen der Saugdüse 11 in Durchmesser d und Länge L einer geeigneten Bandbreite geometrischer Relationen genügen.

Bei pneumatischen Sand-Fördersystemen muss man zudem unterscheiden, ob die Förderluft auf der Druckseite "eingeblasen" oder auf der Sogseite "abgesaugt" wird. Der Unterschied mag in eindimensionalen Luftleitungen mit im Wesentlichen leichten und kontinuierlichen Querschnittsveränderungen, in denen nur unwesentlich Luftwirbel oder Schallwellen gebildet werden können, gering sein. Der Unterschied kann dagegen in "mehrdimensionalen" Luftleitungen, z.B. mit abrupten Querschnittsänderungen, labyrinthartigen Verzweigungen, kesselförmigen Aufweitungen o.dgl. groß werden.

Wird die Luft auf der Druckseite eingeblasen und es bilden sich Strömungsstörungen in Form von Wirbeln oder Schallwellen, dann können sich diese Störsysteme leicht dadurch selbst verstärken, dass sie durch zuströmende Luft-Masse infolge Luftdruckerhöhung aktiv gespeist werden. Wird die Luft aber auf der Sogseite abgesaugt und es entstehen Strömungsstörungen in Form von Wirbeln oder Schallwellen, dann werden diese eher abgeschwächt, weil ihnen durch das anliegende Saugluftpotential instantan und aktiv Masse entzogen wird.

Bei Zwei-Phasen-Systemen wie Sand-Luft-Gemischen kommen wohl weitere Effekte zur nachteiligen Bildung von Störsystemen hinzu, die den Gemengestrom zusätzlich hemmen. Bläst man nämlich Sand mit Druckluft in oder durch einen Trichter oder eine konvergente Fangdüse, prallen die Sandkörner von den Trichterwänden ab oder werden in Richtung auf die Trichterachse abgelenkt, wo sie sich durch gegenseitige Stöße am Durchtritt durch den Trichterhals bzw. Diffusorhals behindern. Gleichzeitig bieten die relativ massereichen Sandkörner mit rauer Oberfläche dem Druckluftstrom einen erheblichen Strömungswiderstand, der zu zusätzlichen Strömungsstörungen im Strömungsorgan führt.

Die erfindungsgemäße Saugdüse 11 verbessert dagegen die Strömungseigenschaften des Strahlpumpensystems auf vorteilhafte Art und Weise.

Zum einen verstärkt die erfindungsgemäße Saugdüse 11 die Saugwirkung der Strahlpumpe durch die strömungsgünstigere Zylinderform und die dadurch begünstigte Gleichrichtung des Treibmittels (Druckluft) oder verlustfreiere Umformung des Freistrahls. Die Luft mit dem Sand aus dem Vorratsbehälter wird dadurch mehr durch die Saugwirkung in der Saugdüse 11 angesaugt und weniger durch die Druckluft aus der Treibdüse 6 durch Fangdüse und Diffusorhals "gedrückt". Das wirkt auch einer verstärkten Wirbelbildung im Luft-Sand-Gemenge im "Mischraum" entgegen. Insgesamt verbessern sich also die Strömungseigenschaften des Strömungsorgans und gleichzeitig vergrößert sich das Saugluftpotential zwischen atmosphärischem Umgebungsdruck vor Rad und Schiene und Unterdruck im Vorratsbehälter. Speziell für die Förderung von Luft-Sand-Gemischen erhöht die Anordnung der erfindungsgemäßen Saugdüse 11 vorteilhaft den Wirkungsgrad der Strahlpumpe.

Zum anderen werden die Sandkörner mit einem störungsfreieren Luftfluss aus dem Vorratsbehälter über die Sandtreppe in die Saugdüse 11 gesaugt und geführt und bevorzugt in der länglichen zylindrischen Saugdüse 11 über eine definierte Leitungsstrecke - unabhängig von der unterschiedlichen Größe der Sandkörner - gleichförmiger beschleunigt. Die gleichförmigere Geschwindigkeitsverteilung der Sandkörner bewirkt in der Folge auch vorteilhaft, dass der Sand in gleichmäßigerem Strom aus der Austragseinrichtung 9 bzw. dem Sandungs- oder Austragsschlauch 13 austritt und dadurch gezielter zwischen Rad und Schiene platziert werden kann.

Die effektive Länge der Saugdüse 11, d.h. die definierte Leitungsstrecke mit im Wesentlichen konstantem Querschnitt, richtet sich hauptsächlich nach der erzielten gleichförmigen Strömungsgeschwindigkeit des Luft-Sand-Gemisches in der Saugdüse 11.

An dem von der Austragseinrichtung 9 abgewandten Ende 15 der Saugdüse 11 treten Freistrahlluft aus der Treibdüse 6, angesaugte Luft aus dem Vorratsbehälter und damit fluidisierter Sand in unterschiedlichen Korngrößen und -massen turbulent sowie mit unterschiedlichen Geschwindigkeiten in die Saugdüse 11 ein. An dem zu der Austragseinrichtung 9 gerichteten Ende 19 der Saugdüse 11 tritt das Luft-Sand-Gemisch vorteilhaft mit homogenisiertem Geschwindigkeitsprofil und in laminarer Strömung in Achsrichtung wieder aus.

Die Saugdüse 11 ist also in Länge L und im Wesentlichen konstantem Innendurchmesser d so bemessen, dass in Abhängigkeit von der sich in der Saugdüse 11 einstellenden Luftgeschwindigkeit alle Sandkörner unabhängig von ihrer Größe, Masse oder Oberflächenbeschaffenheit eine einheitliche Geschwindigkeit und Strömungsrichtung haben.

Aus Versuchen mit vergleichbaren Sandstreusystemen und aus der Strömungslehre kann abgeleitet werden, dass eine effektive Länge L der Saugdüse 11 von wenigstens 5 - 10 mm erforderlich ist, um Sandkörner bis 2 mm Größe bei vorgegebenen Druckluftmengen und Luftgeschwindigkeiten effektiv zu beschleunigen. Weiter hat sich gezeigt, dass die erzielbare Effektivität des pneumatischen Systems vom gewählten Innendurchmesser d der Saugdüse 11 abhängig ist.

Die effektive Länge L der Saugdüse 11 sollte mindestens die Größe des 1-fachen Innendurchmessers d betragen, wobei vorzugsweise die effektive Länge L der Saugdüse 11 wenigstens dem 2-fachen Innendurchmesser d entsprechen sollte.

Auch hat sich gezeigt, dass der Innendurchmesser d der Saugdüse 11 mit dem Abstand a der Treibdüsenöffnung 7 vom zur Treibdüse 6 gerichteten Ende 15 der zur Treibdüse 6 koaxial angeordneten Saugdüse 11 korrelieren muss. Insbesondere darf der Abstand a der Treibdüsenaustrittsöffnung 7 (bei üblichen Treibdüsendurchmessern von 0,6 - 1,2 mm) von dem Ende 15 nicht größer sein als der 2-fache Innendurchmesser d der Saugdüse 11. Bei einem größeren Abstand a entstehen im Einflussbereich des Zylinderrandes Wirbel oder Strömungsstörungen, die den Strömungswiderstand des Saugsystems nachteilig vergrößern.

Um Strömungsstörungen und Wirbelbildung auch bei einer Schar von konstruktiv gewählten Abmessungen der Konstruktionsteile zu vermeiden, sollte der Abstand a der Treibdüsenaustrittsöffnung 7 vom zur Treibdüse 6 gerichteten Ende 15 der Saugdüse 11 vorzugsweise nicht größer als der 0,8-fache Innendurchmesser der Saugdüse 11 sein.

Andererseits darf der Abstand der Treibdüsenaustrittsöffnung 7 zur Treibdüse 6 gerichteten Ende 15 der Saugdüse 11 nicht zu gering gewählt werden, damit konstruktiv genügend Raum als Injektionsraum für das Saugsystem und eine ausreichend dimensionierte Durchflussöffnung vom Vorratsbehälter zur Saugdüse 11 für ein angesaugtes und auch turbulent strömendes Luft-Sand-Gemisch verbleibt.

Die Größe des Innendurchmessers d der Saugdüse 11 hängt unter anderem vom verfügbaren Luftdruckpotential, dem gewünschten Mengendurchfluss des gewählten Streusandes, der verfügbaren oder erzielbaren Druckluftmenge und vom Öffnungsdurchmesser der Treibdüse 6 ab. Eine weitere und in der Regel unbekannte Einflussgröße stellt die Luftmenge dar, die mit dem Sand aus dem Vorratsbehälter angesaugt und zusammen mit Druckluft (Treibmedium) und dem Sand aus dem System mit ausgetragen wird.

Die Größe des Innendurchmessers d der Saugdüse 11 hängt insbesondere vom Öffnungsdurchmesser der Treibdüse 6 ab. Wird der Innendurchmesser d der Saugdüse 11 zu groß gewählt, verliert der sich ausbreitende Freistrahl teilweise seine abdichtende Wirkung zwischen dem atmosphärischen Umgebungsdruck und dem erzeugten relativen Unterdruck im Mischraum 4. Die abdichtende Wirkung der Saugdüse 11 bleibt jedoch vorteilhaft erhalten, wenn die Größe des Innendurchmessers d der Saugdüse 11 kleiner als die 12-fache Größe des Durchmessers der Austrittsöffnung 7 der Treibdüse 6 ist.

Andererseits darf die Größe des Innendurchmessers d der Saugdüse 11 nicht zu klein gewählt werden, sonst kann die Saugdüse 11 den Freistrahl nicht vollständig fangen. Bei üblicherweise verwendeten Treibdüsen 6 der hier gemeinten Streusysteme darf der Innendurchmesser der Saugdüse 11 dazu nicht kleiner als die 5-fache Größe des Durchmessers der Austrittsöffnung 7 der Treibdüse 6 sein.

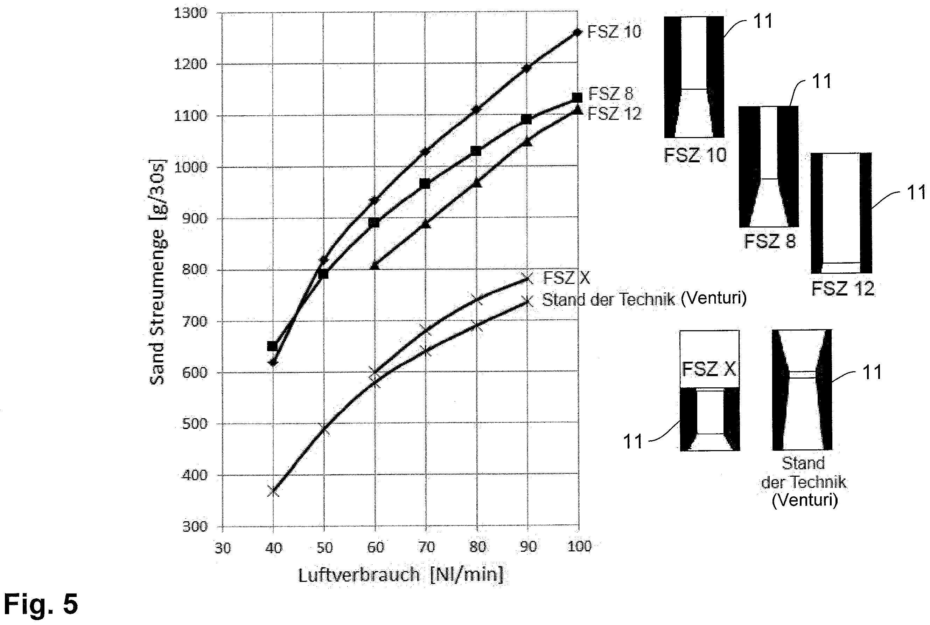

Die nachfolgende Tabelle in Verbindung mit dem in **Fig. 5** dargestellten Diagramm zeigen den Luftverbrauch und die Sand-Streumengen der einzelnen Saugdüsen 11 mit unterschiedlichen Formen und Durchmessern:

| Luftverbrauch [N1/min] | Sand-Streumenge [g/30s] | | | | |
|---|---|---|---|---|---|
| | Saugdüse 11 (FSZ 10) | Saugdüse 11 (FSZ 8) | Saugdüse 11 (FSZ 12) | Saugdüse 11 (FSZ X) | Saugdüse 11 (Venturi) |
| | | | | | |
| 40 | 620 | 650 | | | 370 |
| 50 | 820 | 790 | | | 490 |
| 60 | 935 | 890 | 810 | 600 | 580 |
| 70 | 1030 | 965 | 890 | 680 | 640 |
| 80 | 1110 | 1030 | 970 | 740 | 690 |
| 90 | 1190 | 1090 | 1050 | 780 | 735 |
| 100 | 1260 | 1130 | 1110 | | |

Wie die Tabelle und das Diagramm zeigen kann mit der Saugdüse 11 (FSZ 10) mit einem mittleren Durchmesser d von 10 mm und einer optimierten Länge L bei gleichgroßem Druckluftverbrauch eine größere Sandmenge bzw. mehr Streusand angesaugt und ausgeblasen werden. Alternativ wird mit dieser Saugdüse 11 (FSZ 10) bei gleichbleibenden Sandmengen weniger Druckluft benötigt.

Mit einer Saugdüse 11 (FSZ X), deren Abstand a von der Austrittsöffnung 7 der Treibdüse 6 größer als der doppelte Durchmesser d der Saugdüse 11 ist, können die Werte der Saugdüsen 11 (FSZ 10, FSZ 8, FSZ 12) bei weitem nicht erreicht werden, wobei die Werte der Saugdüse 11 (FSZ X) noch leicht über den Werten der Saugdüse 11 (Venturi) nach dem Stand der Technik (siehe auch **Fig. 1**) liegen.

## Patentansprüche

1. Streueinrichtung (1) für das Ausbringen von Schüttgut, insbesondere von Bremssand, an schienengebundenen Fahrzeugen, mit einem Vorratsbehälter für das Schüttgut, einem Auslauf am Vorratsbehälter, einer sich an den Auslauf anschließenden Mischeinrichtung (3) mit einem zum druckluftbeaufschlagten Aufwirbeln des Schüttgutes vorgesehenen Mischraum (4), einem Einlass (5) für die Zuführung der Druckluft in der Mischeinrichtung (3) sowie einem zu einer Austragseinrichtung (9) für das Schüttgut-Luft-Gemisch führenden Auslass (10) im Mischraum (4) bzw. in der Mischeinrichtung (3), wobei am Auslass (10) eine Saugdüse (11) vorgesehen ist, an die sich die Austragseinrichtung (9) anschließt, wobei der Düsenkanal (12) der Saugdüse (11) durch eine zylindrische Bohrung (14) gebildet wird, und wobei zur Bildung einer Sandtreppe im Mischraum (4) die Saugdüse (11) mit ihrem von der Austragseinrichtung (9) abgewandten Ende (15) so weit in den Mischraum (4) hineinragt, dass das von der Austragseinrichtung (9) abgewandte Ende (15) der Saugdüse (11) oberhalb der Austrittsöffnung (17) des Auslaufes in dem Mischraum (4) angeordnet ist,
**dadurch gekennzeichnet,**
**dass** die Länge (L) der zylindrischen Bohrung (14) innerhalb der Saugdüse (11) mindestens gleich der Größe des Durchmessers (d) der zylindrischen Bohrung (14) in der Saugdüse (11) ist, und dass der Abstand (a) der Saugdüse (11) bzw. der Eintrittsöffnung (16) der Saugdüse (11) zu der Austrittsöffnung (7) des Einlasses (5) für die Zuführung der Druckluft in der Mischeinrichtung (3) kleiner als die 2-fache Größe des Innendurchmessers (d) der zylindrischen Bohrung (14) ist.

2. Streueinrichtung nach Anspruch 1,
**dadurch gekennzeichnet,**
**dass** die Größe des Innendurchmessers (d) der zylindrischen Bohrung (14) mindestens 5-fach größer als der Durchmesser der Austrittsöffnung (7) des Einlasses (5) ist.

3. Streueinrichtung nach Anspruch 1 oder 2,
**dadurch gekennzeichnet,**
**dass** die Größe des Innendurchmessers (d) der zylindrischen Bohrung (14) kleiner als die 12-fache Größe des Durchmessers der Austrittsöffnung (7) des Einlasses (5) ist.

4. Streueinrichtung nach einem der Ansprüche 1 bis 3,
**dadurch gekennzeichnet,**
**dass** die Austrittsöffnung (7) des Einlasses (5) für die Zuführung der Druckluft koaxial zu der Bohrung (14) der Saugdüse (11) angeordnet ist.

5. Streueinrichtung nach einem der Ansprüche 1 bis 4,
**dadurch gekennzeichnet,**
**dass** in dem Einlass (5) für die Zuführung der Druckluft in der Mischeinrichtung (3) eine Treibdüse (6) eingesetzt ist, wobei die Austrittsöffnung (7) des Düsenkanals (8) der Treibdüse (6) der Austrittsöffnung (7) des Einlasses (5) entspricht.

6. Streueinrichtung nach einem der Ansprüche 1 bis 5,
**dadurch gekennzeichnet,**
**dass** an dem zur Austragseinrichtung (9) gerichteten Ende (19) der Saugdüse (11) ein weiterer Einlass (21) für die Zuführung von Druckluft vorgesehen ist.

7. Streueinrichtung nach Anspruch 6,
**dadurch gekennzeichnet,**
**dass** an dem zu der Austragseinrichtung (9) gerichteten Ende (19) der Saugdüse (11) zwischen der Saugdüse (11) und der Austragseinrichtung (9) eine Innenumfangsnut (22) gebildet ist, in die der weitere Einlass (21) radial mündet, wobei die Saugdüse (11) mit ihrem zu der Austragseinrichtung (9) gerichteten Ende (19) in die Austragseinrichtung (9) hineinragt und zwischen einem Absatz (23) an dem zu der Austragseinrichtung (9) gerichteten Ende (19) der Saugdüse (11) und einer Durchflussöffnung (18) der Austragseinrichtung (9) bzw. des Sandungs- oder Austragsschlauchs (13) der Austragseinrichtung (9) ein mit der Innenumfangsnut (22) in Verbindung stehender Ringspalt (24) gebildet ist.

8. Streueinrichtung nach Anspruch 6 oder 7,
**dadurch gekennzeichnet,**
**dass** in dem weiteren Einlass (21) eine Drossel angeordnet ist.

9. Streueinrichtung nach einem der Ansprüche 1 bis 8,
**dadurch gekennzeichnet,**
**dass** der Düsenkanal (12) der Saugdüse (11) einen sich an das Ende der zylindrischen Bohrung (14) des Düsenkanals (12) der Saugdüse (11) anschließenden, sich bis zum zur Austragseinrichtung (9) gerichteten Ende (19) der Saugdüse (11) erstreckenden, konisch aufgeweiteten Abschnitt (20) aufweist.

10. Streueinrichtung nach einem der Ansprüche 1 bis 9,
**dadurch gekennzeichnet,**
**dass** die Saugdüse (11) durch einen Rohr (25) gebildet ist.

11. Streueinrichtung nach Anspruch 10,
**dadurch gekennzeichnet,**
**dass** das Rohr (25) im Wesentlichen L-förmig ausgebildet ist, wobei die Länge (L) der zylindrischen Bohrung (14) innerhalb des vertikal gerichteten Rohrabschnitts (25a) des Rohres (25) gebildet ist.

12. Streueinrichtung nach einem der Ansprüche 1 bis 11,
**dadurch gekennzeichnet,**
**dass** die Saugdüse (11) integraler Bestandteil der Austragseinrichtung (9) ist.

## Claims

1. A scattering device (1) for discharging bulk material, in particular brake sand, on rail-mounted vehicles, having a storage tank for the bulk material, a discharge on the storage tank, a mixing device (3) connecting to the discharge and having a mixing room (4) intended for whirling up the bulk material using compressed air, an inlet (5) for supplying the compressed air to the mixing device (3) as well as an outlet (10) in the mixing room (4) or in the mixing device (3) leading to a discharge device (9) for the mixture of bulk material and air, a suction nozzle (11) being provided on the outlet (10), said discharge device (9) connecting to the suction nozzle (11), the nozzle duct (12) of the suction nozzle (11) being formed by a cylindrical bore (14), and said suction nozzle (11) protruding so far into the mixing room (4) with its end (15) facing away from the discharge device (9) in order to form sand stairs in the mixing room (4) that the end (15) of the suction nozzle (11) facing away from the discharge device (9) is arranged in the mixing room (4) above the exit opening (17) of the discharge,
**characterized in that**
the length (L) of the cylindrical bore (14) within the suction nozzle (11) is at least equal to the size of the diameter (d) of the cylindrical bore (14) in the suction nozzle (11), and **in that** the distance (a) of the suction nozzle (11) or the entry opening (16) of the suction nozzle (11), respectively, to the exit opening (7) of the inlet (5) for supplying the compressed air to the mixing device (3) is smaller than twice the size of the inner diameter (d) of the cylindrical bore (14).

2. The scattering device according to claim 1,
**characterized in that**
the size of the inner diameter (d) of the cylindrical bore (14) is at least five times the size of the diameter of the exit opening (7) of the inlet (5).

3. The scattering device according to claim 1 or 2,
**characterized in that**
the size of the inner diameter (d) of the cylindrical bore (14) is smaller than twelve times the size of the diameter of the exit opening (7) of the inlet (5).

4. The scattering device according to any one of the claims 1 to 3,
**characterized in that**
the exit opening (7) of the inlet (5) for supplying the compressed air is arranged coaxially to the bore (14) of the suction nozzle (11).

5. The scattering device according to any one of the claims 1 to 4,
**characterized in that**
a propelling nozzle (6) is inserted in the inlet (5) for supplying the compressed air to the mixing device (3), the exit opening (7) of the nozzle duct (8) of the propelling nozzle (6) corresponding to the exit opening (7) of the inlet (5).

6. The scattering device according to any one of the claims 1 to 5,
**characterized in that**
another inlet (21) for supplying the compressed air is intended on the end (19) of the suction nozzle (11) facing towards the discharge device (9).

7. The scattering device according to claim 6,
**characterized in that**
on the end (19) of the suction nozzle (11) facing towards the discharge device (9), an inner-peripheral groove (22) is formed between the suction nozzle (11) and the discharge device (9) into which the other inlet (21) radial opens, said suction nozzle (11) protruding into the discharge device (9) with its end (19) facing towards the discharge device (9) and an annular gap (24), which is connected to the inner peripheral groove (22), being formed between a ledge (23) on the end (19) of the suction nozzle (11) facing towards the discharge device (9) and a passage opening (18) of the discharge device (9) or rather the sand or discharge pipe (13) of the discharge device (9).

8. The scattering device according to claim 6 or 7,
**characterized in that**
a throttle is arranged in the other inlet (21).

9. The scattering device according to any one of the claims 1 to 8,
**characterized in that**
the nozzle duct (12) of the suction nozzle (11) comprises a conically widened section (20) extending to the end (19) of the suction nozzle (11) facing towards the discharge device (9) and connecting to the end of the cylindrical bore (14) of the nozzle duct (12) of the suction nozzle (11).

10. The scattering device according to any one of the claims 1 to 9,
**characterized in that**
the suction nozzle (11) is formed by a tube (25).

11. The scattering device according to claim 10,
**characterized in that**
the tube (25) is designed essentially in an L shape, the length (L) of the cylindrical bore (14) being formed within the vertically directed tube section (25a) of the tube (25).

12. The scattering device according to any one of the claims 1 to 11,
**characterized in that**
the suction nozzle (11) is an integral component of the discharge device (9).

## Revendications

1. Dispositif (1) de sablage pour décharger du vrac, en particulier du sable de freinage, à des véhicules roulants sur rails, ayant un réservoir pour le vrac, un décharge au réservoir, un dispositif (3) de mélange reliant au décharge et ayant une chambre (4) de mélange prévue pour tourbillonner le vrac en utilisant de l'air comprimant, une entrée (5) pour alimenter de l'air comprimé au dispositif (3) de mélange ainsi qu'une sortie (10), qui mène à un dispositif (9) de décharge pour le mélange de vrac et d'air, dans la chambre (4) de mélange ou dans le dispositif (3) de mélange, respectivement, une buse (11) de succion étant pourvue à la sortie (10), ledit dispositif (9) de décharge se reliant à ladite buse (11) de succion, le conduit (12) de buse de la buse (11) de succion étant formée par un perçage (14) cylindrique, et ladite buse (11) de succion empiétant si loin dans la chambre (4) de mélange en utilisant son extrémité (15) détournée du dispositif (9) de décharge pour former un escalier de sable dans la chambre (4) de mélange que l'extrémité (15) de la buse (11) de succion détournée du dispositif (9) de décharge est disposée dans la chambre (4) de mélange au-dessus de l'ouverture (17) de sortie de la sortie,
**caractérisé en ce que**
la longueur (L) du perçage (14) cylindrique dans la buse (11) de succion est au moins égale à la largeur du diamètre (d) du perçage (14) cylindrique dans la buse (11) de succion, et **en ce que** la distance (a) de la buse (11) de succion ou de l'ouverture (16) de sortie de la buse (11) de succion, respectivement, à l'ouverture (7) de sortie de l'entrée pour alimenter de l'air comprimé dans le dispositif (3) de mélange est inférieure que deux fois la largeur du diamètre (d) intérieur du perçage (14) cylindrique.

2. Dispositif de sablage selon la revendication 1,
**caractérisé en ce que**
la largeur du diamètre (d) intérieur du perçage (14) cylindrique est au moins cinq fois plus grande que le diamètre de l'ouverture (7) de sortie de l'entrée (5).

3. Dispositif de sablage selon la revendication 1 ou 2,
**caractérisé en ce que**
la largeur du diamètre (d) intérieur du perçage (14) cylindrique est plus petite que douze fois la largeur du diamètre de l'ouverture (7) de sortie de l'entrée (5).

4. Dispositif de sablage selon l'une quelconque des revendications 1 à 3,
**caractérisé en ce que**
l'ouverture (7) de sortie de l'entrée (5) pour alimenter de l'air comprimé est disposée de manière coaxiale au perçage (14) de la buse (11) de succion.

5. Dispositif de sablage selon l'une quelconque des revendications 1 à 4,
**caractérisé en ce qu'**
une buse (6) propulsive est insérée dans l'entrée (5) pour alimenter de l'air comprimé dans le dispositif (3) de mélange, l'ouverture (7) de sortie du conduit (8) de buse de la buse (6) propulsive correspondant à l'ouverture (7) de sortie de l'entrée (5).

6. Dispositif de sablage selon l'une quelconque des revendications 1 à 5,
**caractérisé en ce qu'**
une outre entrée (21) pour alimenter de l'air comprimé est prévue à l'extrémité (19) de la buse (11) de succion tournée vers le dispositif (9) de décharge.

7. Dispositif de sablage selon la revendication 6,
**caractérisé en ce qu'**
à l'extrémité (19) de la buse (11) de succion tournée vers le dispositif (9) de décharge, une rainure (22) de périmètre intérieur est formée entre la buse (11) de succion et le dispositif (9) de décharge, ladite outre entrée (21) se débouchant radialement dans ladite rainure (22) de périmètre intérieur, ladite buse (11) de succion empiétant dans le dispositif (9) de décharge en utilisant son extrémité (19) tournée vers le dispositif (9) de décharge et une fente (24) annulaire, qui est en connexion avec la rainure (22) de périmètre intérieur, étant formée entre une saillie (23) à l'extrémité (19) de la buse (11) de succion tournée vers le dispositif (9) de décharge et une ouverture (18) de passage du dispositif (9) de décharge ou le tuyau (13) de sablage ou décharge, respectivement, du dispositif (9) de décharge.

8. Dispositif de sablage selon la revendication 6 ou 7,
**caractérisé en ce qu'**
un étranglement est disposé dans l'outre entrée (21).

9. Dispositif de sablage selon l'une quelconque des revendications 1 à 8,
**caractérisé en ce que**
le conduit (12) de buse de la buse (11) de succion comprend une zone (20) élargie de manière conique et s'étendant jusque l'extrémité (19) de la buse (11) du succion tournée vers le dispositif (9) de décharge et se reliant à l'extrémité du perçage (14) cylindrique du conduit (12) de buse de la buse (11) de succion.

10. Dispositif de sablage selon l'une quelconque des revendications 1 à 9,
**caractérisé en ce que**
la buse (11) de succion est réalisée par un tuyau (25).

11. Dispositif de sablage selon la revendication 10,
**caractérisé en ce que**
le tuyau (25) est réalisé essentiellement en forme L, la longueur (L) du perçage (14) cylindrique étant formé dans la zone (25a) de tuyau du tuyau (25) orienté verticalement.

12. Dispositif de sablage selon l'une quelconque des revendications 1 à 11,
**caractérisé en ce que**
la buse (11) de succion est un composant intégral du dispositif (9) de décharge.
